## Europäisches Patentamt
## European Patent Office
## Office européen des brevets

(19)

(11) Publication number: **0 077 191**
**B1**

# (12) EUROPEAN PATENT SPECIFICATION

(45) Date of publication of patent specification: **26.02.86**

(21) Application number: **82305364.0**

(22) Date of filing: **08.10.82**

(51) Int. Cl.⁴: **B 60 D 1/14, B 60 D 1/04**

(54) Towing hitch for vehicles.

(30) Priority: **08.10.81 GB 8130480**

(43) Date of publication of application:
**20.04.83 Bulletin 83/16**

(45) Publication of the grant of the patent:
**26.02.86 Bulletin 86/09**

(84) Designated Contracting States:
**DE FR NL SE**

(56) References cited:
**GB-A-1 077 755**
**GB-A-2 050 141**
**US-A-1 518 311**
**US-A-2 506 773**
**US-A-2 873 982**
**US-A-2 947 551**

(73) Proprietor: **INTERMEC PRODUCTS LIMITED**
**Enfield Works Upper Westwood**
**Bradford-on-Avon Wiltshire (GB)**

(72) Inventor: **Robinson, Richard Eady**
**Paddock Farm Heddington** ,
**Nr. Calne Wiltshire (GB)**

(74) Representative: **Armitage, Ian Michael et al**
**MEWBURN ELLIS & CO. 2/3 Cursitor Street**
**London EC4A 1BQ (GB)**

# Description

This invention relates to a towing hitch for vehicles, and is especially although not exclusively applicable to pick-up hitches for agricultural tractors and similar vehicles.

Agricultural tractors are required to tow both heavy loads such as trailers and lighter loads such as agricultural implements. As agricultural implements are being towed, they are frequently required to be mechanically connected through a universal joint to the power take off (PTO) shaft on the tractor, and this imposes limitations on the positioning of the hitch connection between the tractor and the implement. Commonly, therefore, for this purpose the connection comprises a clevis joint on the end of a drawbar. The drawbar is longitudinally slidable in a housing at the rear of the tractor and can be slid partially out of the housing to one or more operative positions where it is secured by a pin. The drawbar may be mounted in a trunnion assembly at the rear of the tractor so as to be swingable in a horizontal plane about the axis of the securing pin, so that if desired it can be fixed at an angle to the longitudinal direction, e.g. when the drawbar is to be connected to an off-centre mounting on the implement.

However, such drawbar arrangements are unsuitable for heavy loads such as trailers, and for this purpose it has been common to provide a separate pick-up hook. The hook is pivoted in a vertical plane, so that it can be dropped when the tractor is reversing up to a trailer to be connected, and then lifted together with the trailer towing connection by hydraulic rams connected to the tractor's hydraulic system. In some systems, the hook and the drawbar assembly need to be changed over as required, and this is inconvenient and time-consuming. In another system, an assembly is provided which is reversible, having a drawbar assembly at one end and a hook at the other, but this is still inconvenient and time-consuming since they still need to be changed over as required.

To overcome these disadvantages, a system is known in which a trunnion assembly and housing for a drawbar are vertically pivoted and rest on top of the hooked bar so as to be lifted with it. When the drawbar is to be used, it is slidably extended as normal into its operative position, where it is unimpeded by the hook. When the hook is used, the drawbar is fixed and is approached by the hook from beneath, with the hook being retained just below the drawbar, so as to tend to enclose the towing eye of the trailer being towed and prevent it coming adrift from the hook.

However, two problems arise in practice. Firstly, for a swingable drawbar, when it is to be used it must first be drawn partially out of its housing, and then a pivot pin must be inserted through it and its housing at its inner end. Access for this purpose requires grovelling underneath the tractor, which can be both dirty and inconvenient. Furthermore once the drawbar has been swung horizontally into the required position, it must be fixed in that position, usually by means of an inverted U-shaped staple which is positioned over it. Thus, fixing the drawbar is a two-stage operation.

The second problem is that when the towing hook is in use, although the drawbar fixed above the hook tends to keep the towing eye of the trailer engaged in the hook, it is quite possible for the eye to accidentally lift the drawbar and slip off the hook.

US—A—2,873,982 discloses a system according to the precharacterising portion of claim 1 and having a drawbar which is pivotally connected adjacent its inner end to the inner end of a housing frame, by a pin. The drawbar has a plurality of holes for the pin, so that it is securable in a plurality of longitudinal positions for different conditions of use.

The present invention provides a towing hitch for a vehicle, comprising a drawbar in a housing, the drawbar being longitudinally displaceable in the housing, between a plurality of configurations in which it is lockable by means of pivot pin about which it is pivotable in a generally horizontal plane, characterised in that the drawbar is displaceable between a retracted, inoperative position and an extended, operative position, and the pivot pin is attached or attachable at an intermediate region of the drawbar for securing it in the extended position; and that an inner end portion of the drawbar is engageable with one or more pins or abutments fixed relative to the housing when the drawbar is so secured, in order to prevent pivoting of the drawbar out of a desired angular position. Accordingly, only one securing device (the pivot pin) needs to be positioned in order to secure the drawbar, and because this is at an intermediate position on the drawbar rather than right at the inner end, the assembly can be arranged such that it is unnecessary to grovel underneath the tractor in order to make the drawbar secure. In a preferred form, when the drawbar is in the inoperative position in the housing, the tip of the hook is engageable in a hole or recess on the underside of the drawbar. This reduces the risk of accidental disengagement of a towing eye engaged in the hook. Preferably, said hole for engaging the tip of the hook is a pivot hole for accepting a pivot pin and forming part of a means for attaching an implement (or other article to be towed) to the drawbar.

In order that the invention may be more clearly understood, a pick-up hitch assembly for an agricultural tractor will now be described by way of example with reference to the accompanying drawings, wherein:

Figs. 1, 2 and 3 are perspective views of the hitch assembly in respective different operational positions.

Fig. 4 is a schematic side elevation of the assembly, with different operational positions shown in broken lines, and

Fig. 5 is a schematic plan view of one half of the assembly.

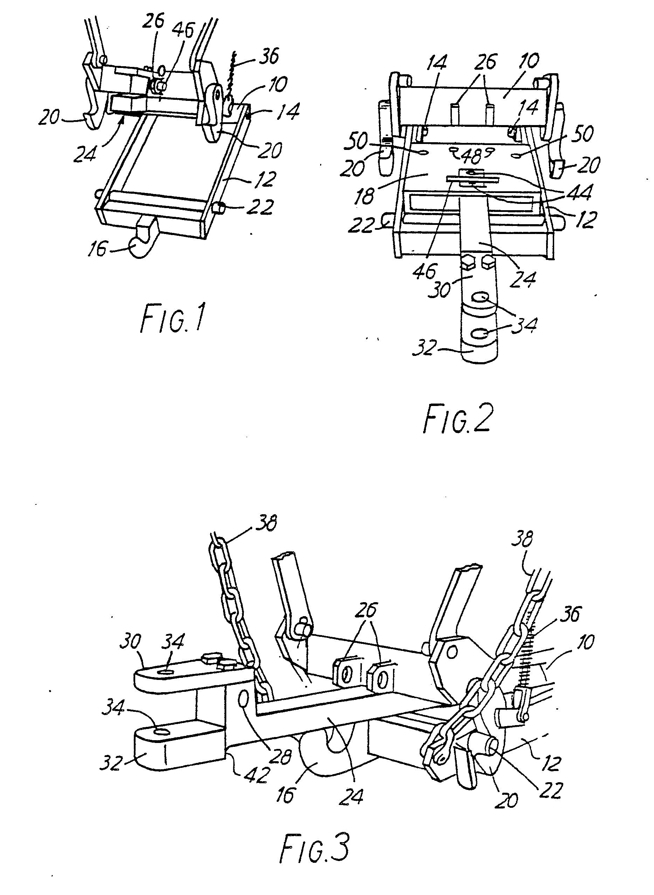

Referring to the drawings, the hitch assembly comprises a support frame 10 which is fixed to the rear of the tractor. To the outside of the support frame 10, there is pivoted at the inner end a sub-frame 12, about pivot points 14. The end of the sub-frame 12 which is remote from the pivot points 14 carries a heavy duty hook 16. To the inside of the rectangular support frame 10, and also pivoted about the pivot points 14, there is a trunnion housing 18. Thus, the sub-frame 12 and the housing 18 can both pivot independently downwards from the support frame 10, as seen respectively in Figs. 1 and 2.

The sides of the support frame 10 are supplied at the end remote from the pivot points 14 with pivotable catches 20. When the sub-frame 12 is lifted up to a position just beneath the support frame 10, these catches engage with the protruding ends of a transverse bar 22 on the sub-frame 12, as best seen in Fig. 3.

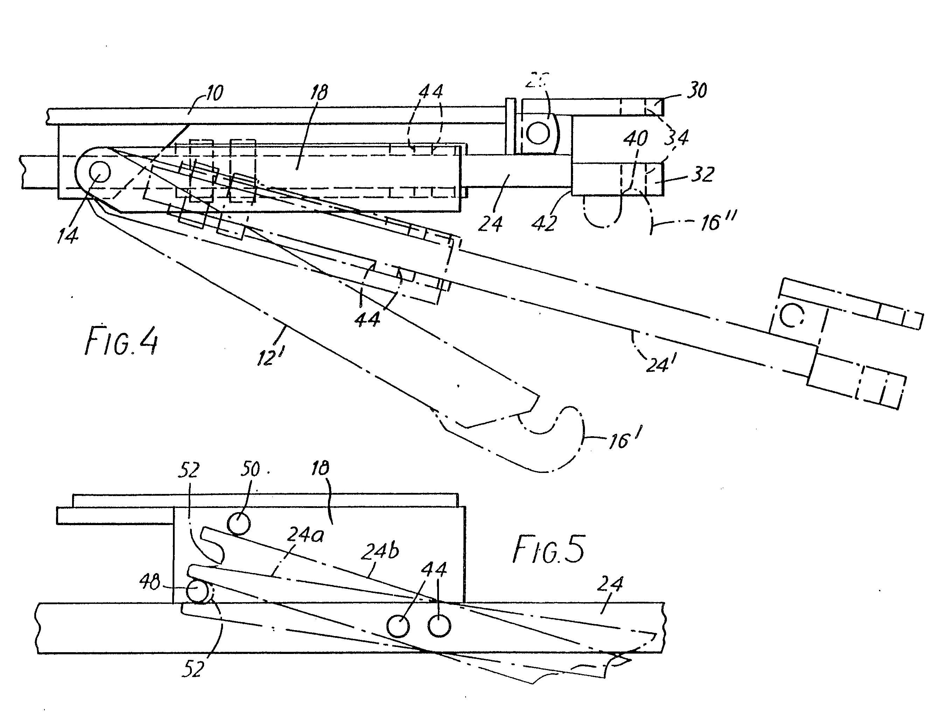

The trunnion housing 18 holds a drawbar 24 which can be moved longitudinally in the housing between an extended, operative position seen in Figs. 2 and 3 (and in broken lines in Fig. 4); and a retracted, inoperative condition seen in Fig. 4 in full lines. As shown in Fig. 3, when the catches 20 engage on the bar 22, the drawbar 24 is trapped between the support frame 10 and the sub-frame 12, and it can be held in the inoperative position by passing a pin 46 through brackets 26 on the support frame 10 and a hole 28 on the drawbar.

At the free end of the drawbar 24, there is a clevis arrangement comprising top and bottom plates 30, 32 with aligned holes 34. In use, the eye of a towing connection of an agricultural implement or the like is placed between the plates 30, 32, with a pivot pin dropped through the eye and the holes 34.

To connect up the heavy duty hook 16 to tow heavier loads such as trailers, the catches 20 will be undone from the transverse bar 22 by trip cables 36 which are spring biased to normally hold the catches 20 in the engaged position (see Fig. 3). Provided the drawbar 24 is attached to the brackets 26 as described above, the sub-frame 12 with the hook 16 will drop to the position shown in Fig. 1 (and as shown at 12', 16' in Fig. 4). The tractor can now be reversed up to the trailer, and the hook 16 engages with its towing eye. The sub-frame 12 is now lifted, picking up the trailer towing connection, by means of chains 38 which are lifted by hydraulic rams (not shown) connected to the tractor's hydraulic system. This will lift the sub-frame up until the hook 16 touches the underside of the bottom plate 32 of the clevis arrangement on the drawbar 24. The hook is now in the position indicated at 16" in Fig. 4. In known arrangements, the hook would merely rest against the underside of the drawbar 24 or the bottom plate 32 in this condition. In such a condition, while the fact that the towing eye in the hook 16 is enclosed overhead by the drawbar 24 or plate 32, in practice there is likely to be some play which could permit the drawbar 24 to be raised slightly and allow the towing eye of the trailer to escape from the hook 16. Accordingly, as shown in Fig. 4, the tip 40 of the hook 16" is arranged such that it fits in the hole 34 of the bottom plate 32 when the hook 16" is in the raised condition and the clevis arrangement is in the inoperative position. Of course, at this time the catches 20 will engage with the transverse bar 22, and thus this ensures that the tip 40 of the hook cannot become disengaged from the hole 34. By this means, even if some play should develop between the drawbar and the hook 16 as components wear with use, there is no possibility of the towing eye of the trailer accidentally becoming disengaged from the hook.

It will be seen particularly from Figs. 3 and 4 that the bottom surface of the bottom plate 32 is slightly lower than the bottom surface of the drawbar 24, having a stepped shoulder 42. The result of this is that the drawbar 24 can rest neatly on the tip 40 of the hook 16 when it is in the operative condition (as seen in Fig. 3), while still allowing for the tip 40 to engage in the hole 34 when the drawbar is in the inoperative position.

However, it is not essential that the bottom surface of the bottom plate 32 should be lower than the bottom surface of the drawbar 24. The bottom of plate 32 may be flush with the drawbar 24, and in this case when the hook is in the position 16" in Fig. 4, the tip 40 should extend slightly above the line of the bottom of the drawbar 24, so as to engage in the hole 34 in the same manner as described above. A shallow counter bore or recess is then formed in the underside of the drawbar 24 so as to accommodate the tip 40 of the hook when the drawbar is in the extended, operative position. The recess should be shaped to ensure that the tip of the hook does not foul the normal, swinging operation of the drawbar described below. Whilst this alternative construction has some attractions, its main disadvantage is that it reduces the strength of the drawbar at the point of maximum shear stress.

Neither is it essential that the tip 40 of the hook should engage in the pivot hole 34. If desired, a special hole or recess could be provided in the underside of the plate 32, for engaging the tip 40. However, this arrangement is not preferred because it is unnecessarily complicated and might reduce the strength of the plate 32.

The trunnion assembly in which the drawbar 24 is housed will now be described in more detail, referring particularly to Figs. 2 and 5. The trunnion housing 18 is essentially a rectangular cross-section sleeve. At the outermost end of this sleeve (i.e. the end furthest from the pivot points 14) the top side of the housing 18 is provided with two longitudinally spaced holes 44. The bottom side of the housing has two matching holes (not shown). When the drawbar 24 is in the inoperative, retracted condition and is secured by means of the brackets 26, these holes 44 are not used. However, when the drawbar is pulled out to the position shown in Fig. 2 (and in dotted lines at 24' in Fig. 4) the T-shaped securing pin 46 taken from the brackets 26 is dropped through one or other of the corresponding pairs of holes in the top and bottom of the housing, engaging in a hole through the drawbar 24. By choosing one or other of these pairs of holes 44, the drawbar can thus be secured in either of two operative positions, depending on the positioning required to suit the particular application.

The trunnion housing 18 has four vertical pins 48, 50 inside it, each welded between the top and bottom of the housing. The pins 48 each abut opposite sides of the drawbar 24 (both in the operative and inoperative positions) and when the drawbar 24 is secured by the pin 46 in the condition shown in Fig. 2, it is prevented from pivoting about the pin 46 by the fact that its innermost end portion abuts the two pins 48. In this normal operative position in which the drawbar projects longitudinally, therefore, the drawbar is completely constrained.

In conditions where it is required that the drawbar 24 should project at an angle to the longitudinal direction, the drawbar 24 is set up in the housing 18 in one or other of the two arrangements shown in dotted lines at 24a and 24b in Fig. 5. In the position 24a, in which the drawbar is only at a small angle to the longitudinal direction, the drawbar is still secured by a pin through the more outwardly of the two pairs of holes 44, but its innermost end portion engages with just one of the pins 48. To permit this, the innermost end portion is bifurcated at 52, the bifurcate end straddling the pin 48 and held in position by the securing pin 46 through the holes 44.

Where a somewhat larger angle to the longitudinal is required for the drawbar 24, it can be secured in the position 24b. In this case, the innermost end of the drawbar engages between adjacent pins 48 and 50, and as before is secured by the pin 46 through the holes 44, and is constrained accordingly.

Fig. 5 only shows half of the trunnion housing 18, but of course it will be understood that the drawbar 24 can equally well be fixed at similar angles on the other side of the longitudinal direction, using the pins 48 and 50 which are not shown in Fig. 5.

In use of the drawbar and its clevis arrangement for towing a less heavy duty load such as an agricultural implement, the drawbar will first be disconnected from the brackets 26. The drawbar 24 is drawn outwardly of the housing 18, and its innermost end is engaged as desired with the pins 48, 50. It is now secured by the simple operation of inserting the pin 46 in the appropriate holes 44. Only this one securing operation is required, and furthermore, because the pin 46 is at the free end of the housing 18 remote from the pivot points 14, this pin can be easily inserted from above and without the need to grovel underneath the tractor. The catches 20 are now undone if this has not already been done, and the drawbar 24, housing 18 and sub-frame 12 are dropped down to the condition seen in Fig. 2. As previously, the tractor is easily reversed up to the implement to be towed (or the implement is brought up to the rear of the tractor). The towing eye of the implement is secured in the clevis arrangement of the drawbar with the pin removed from the brackets 26, and is lifted up by lifting up the whole towing hitch arrangement with the chains 38 as before, until the catches 20 engage the bar 22. The whole arrangement is now in the operative condition as shown in Fig. 3.

A further advantage of the pins 48, 50 through the trunnion housing 18, over the conventional arrangement having a securing pin at the innermost end and a staple straddling the drawbar 24 at the outer end, is that the pins 48, 50 welded to both top and bottom of the sleeve of the housing 18 give the housing extra rigidity. It thus becomes possible to make the housing 18 of a less sturdy construction.

**Claims**

1. A towing hitch for a vehicle, comprising a drawbar (24) in a housing (18), the drawbar being longitudinally displaceable in the housing (18), between a plurality of configurations in which it is lockable by means of a pivot pin (46) about which it is pivotable in a generally horizontal plane, characterised in that the drawbar (24) is displaceable between a retracted, inoperative position and an extended, operative position, and the pivot pin (46) is attached or attachable (44) at an intermediate region of the drawbar (24) for securing it in the extended position; and that an inner end portion of the drawbar (24) is engageable with one or more pins or abutments (48, 50) fixed relative to the housing (18) when the drawbar (24) is so secured, in order to prevent pivotting of the drawbar (24) out of a desired angular position.

2. A towing hitch according to claim 1, wherein the drawbar (24) is engageable between two said pins or abutments (48) to constrain it in the longitudinally projecting operative position.

3. A towing hitch according to claim 1 or 2, wherein the drawbar (24) is engageable between two said pins or abutments (48, 50) to constrain it in an angularly projecting operative position (24b).

4. A towing hitch according to any preceding claim, wherein the inner end of the drawbar (24) is bifurcated, and the bifurcated end (52) is able to straddle one said pin (48) to constrain the drawbar in an angularly projecting operative position (24a).

5. A towing hitch according to any preceding claim, wherein the pins or abutments (48, 50) are rigidly secured between the top and the bottom of the housing (18).

6. A towing hitch according to any preceding claim, including a towing hook (16) beneath the drawbar (24), which hook has a tip (40) which is engageable in a hole or recess (34) on the underside of the drawbar when the drawbar is in the inoperative position.

7. A towing hitch according to claim 6, wherein said hole (34) for engaging the tip (40) of the hook (16) is a pivot hole for accepting a pivot pin and forming part of a means (30, 32, 34) for attaching an implement (or other article to be towed) to the drawbar.

8. A towing hitch according to claim 6 or 7, wherein said hole or recess (34) is provided in an element (32) attached to the drawbar (24), the bottom surface of said element (32) being lower than the bottom surface of the drawbar (24), whereby the tip (40) of the hook (16) can engage in the hole or recess (34) when the drawbar (24) is in the retracted, inoperative position and lie neatly against the bottom surface of the drawbar (24) when the drawbar is in the extended, operative position.

**Revendications**

1. Attelage pour un véhicule comprenant une barre d'attelage (24) dans un logement (18), la barre d'attelage étant longitudinalement déplaçable dans le logement (18) entre un certain nombre de configurations où elle peut être bloquée au moyen d'un pivot (46) autour duquel elle est pivotante dans un plan généralement horizontal, caractérisé en ce que la barre d'attelage (24) est déplaçable entre une position retirée et inactive et une position étendue et active, et le pivot (46) est attaché ou peut être attaché (44) en une région intermédiaire de la barre d'attelage (24) pour la maintenir à la position étendue; et en ce qu'une partie extrême interne de la barre d'attelage (24) peut venir en engagement avec une ou plusieurs chevilles ou aboutements (48, 50) fixes relativement au logement (18) lorsque la barre d'attelage (24) est ainsi fixée, afin d'empêcher le pivotement de la barre d'attelage (24) hors d'une position angulaire souhaitée.

2. Attelage selon la revendication 1, où la barre d'attelage (24) peut venir en engagement entre deux desdites chevilles ou aboutements (48) pour la maintenir en position active faisant longitudinalement saillie.

3. Attelage selon la revendication 1 ou 2, où la barre d'attelage (24) peut venir en engagement entre deux desdites chevilles ou aboutements (48, 50) pour la maintenir en une position active angulairement en saillie (24b).

4. Attelage selon l'une quelconque des revendications précédentes, où l'extrémité interne de la barre d'attelage (24) est bifurquée et l'extrémité bifurquée (52) peut chevaucher l'une desdites chevilles (48) pour maintenir la barre d'attelage en une position active faisant angulairement saillie (24a).

5. Attelage selon l'une quelconque des revendications précédentes, où les chevilles ou aboutements (48, 50) sont rigidement fixés entre le haut et le bas du logement (18).

6. Attelage selon l'une quelconque des revendications précédentes, comprenant un crochet d'attelage (16) en dessous de la barre d'attelage (24), lequel crochet a une extrémité (40) qui peut venir en engagement dans un trou ou un évidement (34) au-dessous de la barre d'attelage lorsque la barre d'attelage est en position inactive.

7. Attelage selon la revendication 6, où ledit trou (34) pour engager l'extrémité (50) du crochet (16) est un trou de pivot pour recevoir un pivot et faisant partie d'un moyen (30, 32, 34) pour attacher une machine (out autre article à remorquer) à la barre d'attelage.

8. Attelage selon la revendication 6 ou 7, où ledit trou ou évidement (34) est prévu dans un élément (32) attaché à la barre d'attelage (24), la surface inférieure dudit élément (32) étant plus basse que la surface inférieure de ladite barre d'attelage (24), ainsi l'extrémité (40) du crochet (16) peut venir en engagement dans le trou ou évidement (34) lorsque la barre d'attelage (24) est à la position retirée inactive et se trouve nettement en dessous de la surface inférieure de la barre d'attelage (24) lorsque la barre d'attelage est en position étendue et active.

**Patentansprüche**

1. Kuppelvorrichtung für ein Fahrzeug, bestehend aus einer Zugstange (24) in einem Gehäuse (18), wobei die Zugstange in dem Gehäuse in Längsrichtung zwischen mehreren Lagen verlagerbar ist, in denen sie mit einem Gelenkzapfen (46) verriegelbar ist, um den sie in einer im allgemeinen horizontalen Ebene verschwenkbar ist, dadurch gekennzeichnet, daß die Zugstange (24) zwischen einer zurückgezogenen unwirksamen Stellung und einer ausgefahrenen wirksamen Stellung verlagerbar ist, daß der Gelenkzapfen (46) an einem mittleren Bereich der Zugstange (24) befestigt oder befestigbar ist, um diese in der ausgefahrenen Position festzulegen, und daß ein innerer Endbereich der Zugstange (24) mit einem oder mehreren relativ zum Gehäuse (18) ortsfesten Zapfen oder Anschlägen (48, 50) in Eingriff bringbar ist, wenn die Zugstange (24) derart festgelegt ist, um eine Verschwenkung der Zugstange (24) aus einer gewünschten Winkelstellung zu verhindern.

2. Kuppelvorrichtung nach Anspruch 1, wobei die Zugstange (24) zwischen zwei Zapfen oder Anschlägen (48) festlegbar ist, um sie in der längsgerichteten wirksamen Stellung zu halten.

3. Kuppelvorrichtung nach Anspruch 1 oder 2, wobei die Zugstange (24) zwischen zwei Zapfen oder Anschlägen (48, 50) festlegbar ist, um sie in einer ausgelenkten wirksamen Stellung (24b) zu halten.

4. Kuppelvorrichtung nach einem der vorhergehenden Ansprüche, wobei das inner Ende der Zugstange (24) gabelförmig ist, und wobei das gabelförmige Ende (52) einen Zapfen (48) umgreifen kann, um die Zugstange in einer ausgelenkten wirksamen Stellung (24a) zu halten.

5. Kuppelvorrichtung nach einem der vorhergehenden Ansprüche, wobei die Zapfen oder Anschläge (48, 50) zwischen der Decke und dem Boden des Gehäuses (18) starr befestigt sind.

6. Kuppelvorrichtung nach einem der vorhergehenden Ansprüche mit einem Zughaken (16) unter des Zugstange (24), wobei der Haken eine Spitze (40) aufweist, die mit einer Öffnung oder einer Ausnehmung (34) an der Unterseite der Zugstange in Eingriff bringbar ist, wenn sich die Zugstange in der wirksamen Stellung befindet.

7. Kuppelvorrichtung nach Anspruch 6, wobei die Öffnung (34) zum Eingriff mit der Spitze (40) des Hakens (16) eine Gelenköffnung zur Aufnahme eines Gelenkzapfens ist und einen Teil einer Einrichtung (30, 32, 34) zur Befestigung eines Arbeitsgerätes (oder eines anderen zu ziehenden Gegenstandes) an der Zugstange bildet.

8. Kuppelvorrichtung nach Anspruch 6 oder 7, wobei die Öffnung oder die Ausnehmung (34) in einem an der Zugstange (24) befestigten Element (32) ausgebildet ist, wobei die Unterseite diese Elementes (32) tiefer liegt als die Unterseite der Zugstange (24), wodurch die Spitze (40) des Hakens (16) in die Öffnung oder die Aussparung (34) eingreifen kann, wenn sich die Zugstange (24) in der zurückgezogenen unwirksamen Stellung befindet, und an der Unterseite der Zugstange (24) anliegen kann, wenn sich die Zugstange in der ausgefahrenen wirksamen Position befindet.

FIG.1

FIG.2

FIG.3

FIG.4

FIG.5